(19) **Europäisches Patentamt / European Patent Office / Office européen des brevets**

(11) **EP 3 057 920 B1**

(12) **EUROPEAN PATENT SPECIFICATION**

(45) Date of publication and mention
of the grant of the patent:
**07.09.2022 Bulletin 2022/36**

(21) Application number: **14854151.9**

(22) Date of filing: **14.10.2014**

(51) International Patent Classification (IPC):
*C04B 28/16* (2006.01)   *C04B 28/14* (2006.01)
*C04B 14/10* (2006.01)

(52) Cooperative Patent Classification (CPC):
(C-Sets available)
**C04B 40/0039; C04B 7/52**   (Cont.)

(86) International application number:
**PCT/US2014/060548**

(87) International publication number:
**WO 2015/057749 (23.04.2015 Gazette 2015/16)**

(54) **METHODS OF CEMENT ADDITIVE ADDITION**

VERFAHREN ZUR ZEMENTADDITIVZUGABE

PROCÉDÉS D'AJOUT D'ADDITIF À CIMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **15.10.2013  US 201361890967 P**

(43) Date of publication of application:
**24.08.2016  Bulletin 2016/34**

(73) Proprietor: **Ecolab USA Inc.
St. Paul, MN 55102 (US)**

(72) Inventor: **TRAN, Bo L.
Chicago, Illinois 60614 (US)**

(74) Representative: **Godemeyer Blum Lenze
Patentanwälte
Partnerschaft mbB - werkpatent
An den Gärten 7
51491 Overath (DE)**

(56) References cited:
**EP-A2- 1 728 771     JP-B2- H0 625 007
KR-A- 940 002 185     US-A- 1 997 782
US-A- 2 512 067       US-A- 4 011 092
US-A- 4 076 546       US-A1- 2008 156 225**

**(Cont. next page)**

(52) Cooperative Patent Classification (CPC): (Cont.)

C-Sets
**C04B 40/0039, C04B 22/143, C04B 2103/10,
C04B 2103/20, C04B 2103/302, C04B 2103/304,
C04B 2103/52, C04B 2103/61**

## Description

## Background of the Invention

The invention relates to methods for improving the addition and mixing of additives for the production of cement. More specifically, the present invention relates to introducing the additives initially to gypsum or other materials to form a mixture. The mixture is then blended with cement clinkers or cement, and finally mixed further in the grinding mill.

Additives including set time accelerator are generally introduced directly into the finish grinding mill of the cement production process. The present invention offers alternative methods to introduce additives to improve mixing and dispersion.

US 2 512 067 provides a method of grinding Portland cement which comprises grinding the cement clinker in admixture with between about 0. 5% and 5.0% of gypsum, which gypsum has been treated with between 0.005% and about 2.0 %, based on the total grinding charge, of a compound selected from the class of compounds consisting of naturally occurring naphthenic acid and metal salts of naturally occurring naphthenic acid.

US 1 997 782 provides a method of producing hydraulic cement of high early strength and quick hardening properties which comprises grinding hydraulic cement clinker, having a lime modulus above 2.10 with neutral sodium sulfate and lime.

It is therefore novel, useful and non-obvious desirable to provide and utilize improved methods of mixing and dispersion. The art described in this section is not intended to constitute an admission that any patent, publication or other information referred to herein is "Prior Art" with respect to this invention, unless specifically designated as such.

## Brief Summary of the Invention

To satisfy the long-felt but unsolved needs identified above, at least one embodiment of the invention is directed towards a method of applying additives to cement. The method comprises the steps of: mixing the additives with one or more components selected from a list of gypsum, hemihydrate, anhydrite, calcium sulfate to form a mixture to form a mixture, mixing the mixture with solid calcium chloride, wherein the mixture excludes water contacting the gypsum prior to the mixture undergoing a grinding process, then blending the mixture with clinker, and finally grinding the mixture and clinker to form cement. The additives may comprise one or more components selected from a list of grinding aids, pack set inhibitors, corrosion inhibitors, accelerators, retarders, air entrainers, and water reducers, and any combination thereof. The additive may be inorganic salt, comprising liquid salt solutions or solid salt forms. The additive may further comprise steel balls. The additive may further comprise glycerin byproduct. The mixture may comprise water in an amount insufficient to adequately disperse the mixture but for the presence of the additive prior to the presence of the clinker. The method may further comprise the step of mixing the mixture with a force of insufficient strength to adequately disperse the mixture but for the presence of the additive prior to the presence of the clinker.

Additional features and advantages are described herein, and will be apparent from, the following Detailed Description.

## Detailed Description of the Invention

The following definitions are provided to determine how terms used in this application, and in particular how the claims, are to be construed. The organization of the definitions is for convenience only and is not intended to limit any of the definitions to any particular category.

*"Clinker"* means a material that comprises one or more calcium silicates, including but not limited to one or more of: tricalcium silicate ($Ca_3SiO_5$, also written $CaO.Ca_2SiO_4$) and dicalcium silicate ($Ca_2SiO_4$), tricalcium aluminate, and calcium aluminoferrite, as well as other common components, these components are often generated in situ by heating various clays and limestone, clinker may be made by heating in a rotary kiln at high temperature a homogeneous mixture of raw materials, the products of this chemical reaction may aggregate together as molten minerals at the sintering temperature, the sintering temperature for modern cements is often about 1450 °C, clinker is lumps or nodules, usually 3-25 mm in diameter, produced by sintering limestone and alumino-silicate (clay) during the cement kiln stage.

*"Gypsum"* includes a very soft sulfate mineral often comprising calcium sulfate dihydrate, which may have the chemical formula $CaSO_4 \cdot 2H_2O_3$

*"Portland Cement"*, the basic ingredient of concrete, is a closely controlled chemical combination of calcium, silicon, aluminum, iron and small amounts of other ingredients to which gypsum is added in the final grinding process to regulate the setting time of the concrete, lime and silica may make up about 85% of the mass, common among the materials used in its manufacture are limestone, shells, and chalk or marl combined with shale, clay, slate or blast furnace slag, silica sand, and iron ore.

*"Finish grinding milf"* means a facility where the clinker and gypsum are grinded to form cement.

*"Coagulant"* means a water treatment chemical often used in solid-liquid separation stage to neutralize charges of suspended solids/particles so that they can agglomerate, coagulants are often categorized as inorganic coagulants, organic coagulants, and blends of inorganic and organic coagulants, inorganic coagulants often include or comprise aluminum or iron salts, such as aluminum sulfate/choride, ferric chloride/sulfate, polyaluminum chloride, and/or aluminum chloride hydrate, organic coagulants are often positively charged polymeric compounds with low molecular weight, including but not limited to polyamines, polyquaternaries, polyDADMAC, Epi-DMA, coagulants often have a higher charge density and lower molecular weight than a flocculant, often when coagulants are added to a liquid containing finely divided suspended particles, it destabilizes and aggregates the solids through the mechanism of ionic charge neutralization, additional properties and examples of coagulants are recited in Kirk-Othmer Encyclopedia of Chemical Technology, 5th Edition, (2005), (Published by Wiley, John & Sons, Inc.).

*"Comminuted"* means powdered, pulverized, ground, or otherwise rendered into fine solid particles.

*"Consisting Essentially of"* means that the methods and compositions may include additional steps, components, ingredients or the like, but only if the additional steps, components and/or ingredients do not materially alter the basic and novel characteristics of the claimed methods and compositions.

*"Dilution Filtration"* means a process in which a material undergoing a filtration process is also being diluted by the addition of liquid to the material, dilution filtration can be simultaneous (the filtration and dilution occur at the same time) staged (the dilution and filtration processes occur one after the other), and/or both and can have one or more relative rates (liquid can be removed from the material by the filtration process faster, slower and/or at the same rate as liquid is added by the dilution process).

*"Droplet"* means a mass of dispersed phase matter surrounded by continuous phase liquid, it may be suspended solid or a dispersed liquid.

*"Filter"* means a structure constructed and arranged to remove suspended materials from within a liquid that is passed through it, more detailed descriptions of filters and filtration are described in The Nalco Water Handbook (3rd Edition), by Daniel Flynn, McGraw Hill (2009) in general and in particular pp. 6.1-8.30.

*"Filter Cake"* means the accumulation of solid matter that is retained on a filter, it increases in the course of filtration and becomes thicker as more particulate matter is retained, with increasing layer thickness the flow resistance of the filter cake increases, and if not removed soon enough, eventually thick filter cake can disrupt filtration because the flow resistance of the filter cake gets so high that too little of the mixture to be filtered can pass through the filter cake and filter plugs.

*"Flocculant"* means a composition of matter which when added to a liquid carrier phase within which certain particles are thermodynamically inclined to disperse, induces agglomerations of those particles to form as a result of weak physical forces such as surface tension and adsorption, flocculation often involves the formation of discrete globules of particles aggregated together with films of liquid carrier interposed between the aggregated globules, as used herein flocculation includes those descriptions recited in ASTM E 20-85 as well as those recited in Kirk-Othmer Encyclopedia of Chemical Technology, 5th Edition, (2005), (Published by Wiley, John & Sons, Inc.), flocculants often have a low charge density and a high molecular weight (in excess of 1,000,000) which when added to a liquid containing finely divided suspended particles, destabilizes and aggregates the solids through the mechanism of interparticle bridging.

*"Flocculating Agent"* means a composition of matter which when added to a liquid destabilizes, and aggregates colloidal and finely divided suspended particles in the liquid, flocculants and coagulants can be flocculating agents.

*"Frother"* means a composition of matter that enhances the formation of the micro-bubbles and/or preserves the formed micro-bubbles bearing the hydrophobic fraction that result from the sparging of slurry.

*"HLB"* means the hydrophillic-lipophillic balance of a material which is a measure of the degree to which it is hydrophilic or lipophilic, it can be determined by the equation:

$$HLB = 20 * Mh/M$$

in which Mh is the molecular mass of the hydrophilic portion of the Molecule, and M is the molecular mass of the whole molecule, giving a result on a scale of 0 to 20.

An HLB value of 0 corresponds to a completely lipidphilic/hydrophobic material, and a value of 20 corresponds to a completely hydrophilic/lypidphobic material. HLB values are characterized as:

    HLB < 10: Lipid soluble (water insoluble)
    HLB > 10: Water soluble (lipid insoluble)
    HLB from 4 to 8 indicates an anti-foaming agent
    HLB from 7 to 11 indicates a W/O (water in oil) emulsifier
    HLB from 12 to 16 indicates O/W (oil in water) emulsifier
    HLB from 11 to 14 indicates a wetting agent
    HLB from 12 to 15 indicates a detergent
    HLB of 16 to 20 indicates a solubiliser or hydrotrope.

*"Hydrocyclone"* means a device to classify, separate or sort particles in a liquid suspension based on the ratio of their centripetal force to fluid resitance, in particular for dense and coarse particles, and low for light and fine particles, they often have a cylindrical section at the top where liquid is being fed tangentially and a conical base, and they often have two exits on the axis: the smaller on the bottom (for underflow) and a larger one at the top (for overflow), generally the underflow is the denser or coarser fraction, while the overflow is the lighter or finer fraction.

*"Interface"* means the surface forming a boundary between two or more phases of a liquid system.

*"Membrane"* means a structure having lateral dimensions much greater than its thickness though which a mass transfer may occur, membranes may be used to filter liquids.

*"RSV"* means reduced specific viscosity, an indication of polymer chain length and average molecular weight. The RSV is measured at a given polymer concentration and temperature and calculated as follows:

$$RSV = \frac{\left[\left(\frac{\eta}{\eta_o}\right) - 1\right]}{c}$$

Wherein $\eta$ = viscosity of polymer solution; $\eta_o$ = viscosity of solvent at the same temperature; and c = concentration of polymer in solution. As used herein, the units of concentration "c" are (grams/100 ml or g/deciliter). Therefore, the units of RSV are dl/g. The RSV is measured at 30 degrees C. The viscosities $\eta$ and $\eta_o$ are measured using a Cannon-Ubbelohde semimicro dilution viscometer, size 75. The viscometer is mounted in a perfectly vertical position in a constant temperature bath adjusted to 30.+-.0.02 degrees C. The error inherent in the calculation of RSV is about 2 dl/g. Similar RSVs measured for two linear polymers of identical or very similar composition is one indication that the polymers have similar molecular weights, provided that the polymer samples are treated identically and that the RSVs are measured under identical conditions.

*"S-Value"* means the measure of the degree of microaggregation of colloidal materials, it can be obtained from measurements of viscosity of the colloidal system and is often related to the performance of the colloidal end product, its exact metes and bounds and protocols for measuring it are elucidated in The Chemistry of Silica: Solubility, Polymerization, Colloid and Surface Properties and Biochemistry of Silica, by Ralph K. Iler, John Wiley and Sons, Inc., (1979).

*"Separation"* means a mass transfer process that converts a mixture of substances into two or more distinct product mixtures, at least one of which is enriched in one or more of the mixture's constituents, it includes but is not limited to such processes as: Adsorption, Centrifugation, cyclonic separation, density based separation, Chromatography, Crystallization, Decantation, Distillation, Drying, Electrophoresis, Elutriation, Evaporation, Extraction, Leaching extraction, Liquid-liquid extraction, Solid phase extraction, Flotation, Dissolved air flotation, Froth flotation, Flocculation, Filtration, Mesh filtration, membrane filtration, microfiltration, ultrafiltration, nanofiltration, reverse osmosis, Fractional distillation, Fractional freezing, Magnetic separation, Precipitation, Recrystallization, Sedimentation, Gravity separation, Sieving, Stripping, Sublimation, Vapor-liquid separation, Winnowing, Zone refining, and any combination thereof.

*"Stable Emulsion"* means an emulsion in which droplets of a material dispersed in a carrier fluid that would otherwise merge to form two or more phase layers are repelled from each other by an energy barrier, the energy barrier may be at least 20 kT, more, or less, the repulsion may have a half-life of at least a few years. Enabling descriptions of emulsions and stable emulsions are stated in general in Kirk-Othmer, Encyclopedia of Chemical Technology, Fourth Edition, volume 9, and in particular on pages 397-403.

*"Substrate"* means a mass containing paper fibers going through or having gone through a papermaking process, substrates include wet web, paper mat, slurry, paper sheet, and paper products.

*"Surfactant"* is a broad term which includes anionic, nonionic, cationic, and zwitterionic surfactants. Enabling descriptions of surfactants are stated in Kirk-Othmer, Encyclopedia of Chemical Technology, Third Edition, volume 8, pages 900-912, and in *McCutcheon's Emulsifiers and Detergents*. All illustrated chemical structures also include all possible stereoisomer alternatives.

At least one embodiment of the invention is directed towards introducing additives during the production of cement. Common additives include but are not limited to grinding aids, retarding reagents, antifoams, water proofing agents, water reducing agents, anti-corrosives, crack reduction agents, set time accelerators, and dispersants. More specifically, the present invention relates to mixing these additives with one or more components selected from a list of gypsum, hemihydrate, anhydrite, calcium sulfate. This mixture is then blended and grinded with cement clinkers to form cement.

The additives may be mixed with materials that are typically blended with clinker. Adding a set time enhancer directly to the gypsum is more effective than adding it during the grinding of the clinker. Gypsum controls the reaction between water and calcium aluminate affecting the setting time. Hence, a set time accelerator is better added or mixed with the gypsum prior to the gypsum being mixed with the clinker and then grinded with the clinker. Dispersion, mixing, and effectiveness of the accelerator is improved.

The present invention provides a method of adding additives during the production of cement. For example, the method can comprise mixing the additive with the gypsum prior to mixing the gypsum with the clinker.

In at least one embodiment cement additives are added or mixed with any material that will be mixed and grinded with the clinker.

An advantage of the present invention is to provide improved dispersion, mixing, and effectiveness of additives during the production of cement.

The present invention relates generally to applying additives during the production of cement. Cement is one of many concrete components. Other components are water, fine, coarse aggregates, chemical admixtures, including water reducers, retarders, accelerators, and air-entraining agents. Supplementary materials include fly ash, blast furnace slags, sea shells or silica fume.

About 80% of cement raw material is limestone. Other raw materials include sources of alumina, silica, and iron oxide. Alumina can be obtained from bauxite. In addition, by-products can be used as raw material components including slag, fly ash, pyrite cinders, ore washings, spent catalyst fines, aluminum ore refuse, copper slag, bottom ash, used foundry sand, spent diatomaceous earth, and slime sludge from paper, sugar, or acetylene production.

Limestone and other raw materials are grinded then heated to about 1500 °C. At high temperatures partial melting occurs. The calcium oxide reacts with silica, alumina, and iron oxide to form silicates, aluminates, and ferrites of calcium, forming clinker. Clinker is about 2.5 cm (one inch) in diameter and smaller.

The clinker is then mixed with gypsum or calcium sulfate and grounded in a grinding mill to produce cement. Limestone can be added to the mix. Typical concentration is >90% clinker, <10% gypsum, and <10% limestone, prior to grinding. Gypsum is added to control the reaction between water and calcium aluminates, ensuring an appropriate set time. Additives such as grinding aids, pack set inhibitors, corrosion inhibitors, accelerators, retarders and air entrainers, and water reducers can be added directly into the grinding mill, after the clinker is mixed with gypsum, hemihydrate, and/or anhydrite.

The invention may make use of one, some or all of the compositions methods and apparatuses described in one or more of United States Published Patent Application 2013/0180434 and 2007/0221764. They teach adding grinding aid to the clinker before or during the final grinding process. The present invention teaches additives will be better mixed and dispersed more effectively, if mixed with gypsum, hemihydrate, and/or anhydrite, limestone, or calcium sulfate, prior to mixing with the clinker.

Additives such as grinding aid are applied at low concentrations as low as 0.006% of the clinker or cement weight. Water can be used to help disperse the additives. But water addition can increase energy consumption and adversely impact the cement production process. The present invention provides methods of improving mixing and dispersion of additives.

The present invention provides methods of applying additives in the production of cement. Additives are mixed with one or more components selected from a list of gypsum, hemihydrate, anhydrite, calcium sulfate prior to mixing with the clinker and grinded. This is to improve additive dispersion and mixing resulting in better performance.

The additives are not mixed with clinker initially, but are mixed with gypsum, hemihydrate, anhydrite, and/or calcium sulfate. The additives are first mixed with gypsum, hemihydrate, anhydrite, and/or calcium sulfate. Then the whole mixture secondly is mixed with clinker, and finally grinded with the clinker for further mixing.

In an embodiment, salt including solid inorganic salt and/or liquid solutions of salt are added to the gypsum and mixed. Salt additives are used to accelerate mortar or concrete set time.

According to the invention, the method comprises the steps of mixing the additives with one or more components selected from a list of gypsum, hemihydrate, anhydrite, calcium sulfate to form a mixture, mixing the mixture with solid calcium chloride, wherein the mixture excludes water contacting the gypsum prior to the mixture undergoing a grinding process, then blending the mixture with clinker, and finally grinding the mixture and clinker to form cement. The additives may comprise of one or more components selected from a list of grinding aids, pack set inhibitors, corrosion inhibitors, accelerators, retarders, air entrainers, and water reducers. The additive may be an inorganic salt, comprising liquid salt solutions and/or solid salt forms.

## EXAMPLES

A trial was run at a large cement plant. The purpose was to accelerate set time by adding a 31% calcium chloride solution into the finish grind where the cement clinkers were being grinded to form cement. Only liquid can be added to the finish grind because there is no inlet to add a solid material. To reduce setting time, the concentration of chloride had to be about 0.04% by weight of the cement. To get to 0.04% chloride concentration we had to add about 65 gallons (246 litres) per hour of the 31% calcium chloride solution, or 69% water. This translates to adding about 220 kg (486 1b) per hour of water into the finish grinding mill. The plant personnel expressed concern the addition of water is causing the dust collector to be blind or clogged. Also, adding too much water can adversely affect the cement characteristics. Cement samples collected from the trial and tested by a third party lab showed a decrease in compressive strength. Set time did reduced. Data is as follows comparing a control sample to the sample with calcium chloride solution added:

Initial set time reduced from 120 minutes to 110 minutes.

Final set time reduced from 200 minutes to 180 minutes.

28-day compressive strength reduced from 6410 (44 MPa) to 5880 psi (41 MPa)

7-day compressive strength reduced from 5170 psi (36 MPa) to 5040 psi (34 MPa)

3-day compressive strength reduced from 4300 psi (29.7 MPa) to 4090 psi (28.2 MPa)

1-day compressive strength reduced from 2170 psi (15.0 MPa) to 2700 psi (18.62 MPa)

The present invention would allow adding calcium chloride without adding water, at a rate that is manageable, by mixing solid concentrated calcium chloride with the gypsum prior to the finish grinding mill. The dust collector would not be clogged because of the water additive, and the strength of cement would not decrease.

All ranges and parameters disclosed herein are understood to encompass any and all subranges subsumed therein, and every number between the endpoints. For example, a stated range of "1 to 10" should be considered to include any and all subranges between (and inclusive of) the minimum value of 1 and the maximum value of 10; that is, all subranges beginning with a minimum value of 1 or more, (e.g. 1 to 6.1), and ending with a maximum value of 10 or less, (e.g. 2.3 to 9.4, 3 to 8, 4 to 7), and finally to each number 1, 2, 3, 4, 5, 6, 7, 8, 9, and 10 contained within the range. All percentages, ratios and proportions herein are by weight unless otherwise specified.

## Claims

1. A method of applying additives to cement comprising the steps of: mixing the additives with one or more components selected from a list of gypsum, hemihydrate, anhydrite, calcium sulfate to form a mixture, mixing the mixture with solid calcium chloride, wherein the mixture excludes water contacting the gypsum prior to the mixture undergoing a grinding process, then blending the mixture with clinker, and finally grinding the mixture and clinker to form cement.

2. The method of claim 1, wherein the additives further comprise of one or more components selected from a list of grinding aids, pack set inhibitors, corrosion inhibitors, retarders, air entrainers, and water reducers, and any combination thereof.

3. The method of claim 1, wherein the additive is inorganic salt, comprising liquid salt solutions or solid salt forms.

4. The method of claim 1, wherein the additive further comprises steel balls.

5. The method of claim 1, wherein the additive further comprises glycerin byproduct.

## Patentansprüche

1. Verfahren zum Auftragen von Additiven auf Zement, umfassend die Schritte: Mischen der Additive mit einer oder mehreren Komponenten, ausgewählt aus einer Liste von Gips, Halbhydrat, Anhydrit, Calciumsulfat, um eine Mischung auszubilden, Mischen der Mischung mit festem Calciumchlorid, wobei die Mischung ein Wasserkontaktieren des Gipses ausschließt, bevor die Mischung einem Mahlprozess unterzogen wird, dann Vermischen der Mischung mit einem Klinker und schließlich Mahlen der Mischung und des Klinkers, um Zement auszubilden.

2. Verfahren nach Anspruch 1, wobei die Additive ferner eine oder mehrere Komponenten umfassen, die aus einer Liste von Mahlhilfsmittel, Packverfestigungsinhibitoren, Korrosionsinhibitoren, Verzögerern, LP-Zusatzstoffen und Fließmitteln und einer beliebigen Kombination davon ausgewählt sind.

3. Verfahren nach Anspruch 1, wobei das Additiv ein anorganisches Salz ist, umfassend flüssige Salzlösungen oder feste Salzausbildungen.

4. Verfahren nach Anspruch 1, wobei das Additiv ferner Stahlkugeln umfasst.

5. Verfahren nach Anspruch 1, wobei das Additiv ferner ein Glycerin-Nebenprodukt umfasst.

## Revendications

1. Procédé d'application d'additifs à du ciment comprenant les étapes suivantes : le mélange des additifs avec un ou plusieurs composants sélectionnés dans une liste de gypse, de hémihydrate, d'anhydrite, de sulfate de calcium pour former un mélange, le mélange du mélange avec du chlorure de calcium solide, le mélange excluant l'eau entrant en contact avec le gypse avant que le mélange ne subisse un processus de broyage, puis l'incorporation du mélange avec du clinker et enfin le broyage du mélange et du clinker pour former du ciment.

2. Procédé selon la revendication 1, dans lequel les additifs comprennent en outre un ou plusieurs composants sélectionnés parmi une liste d'adjuvants de broyage, d'inhibiteurs de prise en masse, d'inhibiteurs de corrosion, de retardateurs, d'entraîneurs d'air et de réducteurs d'eau et de toute combinaison de ceux-ci.

3. Procédé selon la revendication 1, dans lequel l'additif est un sel inorganique, comprenant des solutions salines liquides ou des formes salines solides.

4. Procédé selon la revendication 1, dans lequel l'additif comprend en outre des billes d'acier.

5. Procédé selon la revendication 1, dans lequel l'additif comprend en outre un sous-produit de glycérine.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2512067 A
- US 1997782 A
- US 20130180434 A
- US 20070221764 A

**Non-patent literature cited in the description**

- **KIRK-OTHMER.** Encyclopedia of Chemical Technology. Wiley, John & Sons, Inc, 2005
- **DANIEL FLYNN.** The Nalco Water Handbook. Mc-Graw Hill, 2009, 6-1, 8.30
- **RALPH K. ILER.** The Chemistry of Silica: Solubility, Polymerization, Colloid and Surface Properties and Biochemistry of Silica. John Wiley and Sons, Inc, 1979
- **KIRK-OTHMER.** Encyclopedia of Chemical Technology. vol. 9, 397-403
- **KIRK-OTHMER.** Encyclopedia of Chemical Technology. vol. 8, 900-912